Europäisches Patentamt

European Patent Office

Office européen des brevets

(11) Numéro de publication: **0 057 134**
**B1**

(19)

# (12) FASCICULE DE BREVET EUROPEEN

(45) Date de publication du fascicule du brevet:
**10.04.85**

(21) Numéro de dépôt: **82400105.1**

(22) Date de dépôt: **20.01.82**

(51) Int. Cl.⁴: **F 16 L 23/00**, F 16 L 55/10,
G 21 F 5/00, B 65 D 53/00

(54) **Dispositif de raccordement à serrage élastique.**

(30) Priorité: **23.01.81 FR 8101250**

(43) Date de publication de la demande:
**04.08.82 Bulletin 82/31**

(45) Mention de la délivrance du brevet:
**10.04.85 Bulletin 85/15**

(84) Etats contractants désignés:
**BE CH DE GB IT LI NL SE**

(56) Documents cités:
**FR - A - 342 721**
**FR - A - 990 820**
**FR - A - 1 047 939**
**FR - A - 2 073 318**
**GB - A - 271 379**

(73) Titulaire: **COMMISSARIAT A L'ENERGIE ATOMIQUE
Etablissement de Caractère Scientifique Technique et
Industriel, 31/33, rue de la Fédération, F-75015 Paris (FR)**

(72) Inventeur: **Abbes, Claude, "Les Primevères" 5 Montée
du Crêt du Loup, F-42100 Saint Etienne (FR)**
Inventeur: **Rouaud, Christian, No 19 - Les Genêts,
F-07700 Bourg Saint Andeol (FR)**
Inventeur: **Piednoir, Robert, Quartier Cousignac,
F-07700 Bourg Saint Andeoi (FR)**
Inventeur: **De Villepoix, Raymond, "La Chatelière",
F-26290 Donzere (FR)**

(74) Mandataire: **Mongrédien, André et al, c/o
BREVATOME 25, rue de Ponthieu, F-75008 Paris (FR)**

ACTORUM AG

## Description

La présente invention se rapporte à un dispositif de raccordement à serrage élastique. Plus précisément, l'invention concerne le raccordement au moyen d'un dispositif étanche de deux pièces comprenant des moyens de serrage du type vis-écrou sollicitant les pièces à raccorder l'une vers l'autre afin de comprimer un joint d'étanchéité entre ces pièces.

Dans un tel dispositif, les moyens de serrage peuvent être constitués notamment par des boulons ou par deux pièces en forme de couronne coopérant par un filetage selon que les pièces à raccorder sont de grand ou de petit diamètre. Généralement, les dispositifs de raccordement existants sont assemblés en agissant sur ces moyens de serrage suivant une gamme de serrage adaptée aux caractéristiques mécaniques du joint d'étanchéité utilisé. A cet effet, on utilise soit une clé dynamométrique manuelle, soit une clé mécanique semi-automatique préréglée. Le couple de serrage final est obtenu le plus souvent après plusieurs passages de la clé sur chaque boulon. Pendant toute cette opération, les efforts de tension dans les boulons équilibrent les efforts de compression dans les brides.

Cette méthode très utilisée est économique mais fastidieuse et peu précise car une grande partie des efforts mis en jeu sert à vaincre le frottement sous tête et au niveau des filetages. Lorsque les conditions d'utilisation imposent un serrage précis ou lorsque les conséquences d'un grippage de la boulonnerie risquent d'être graves, il faut donc recourir à d'autres méthodes plus sophistiquées.

Par ailleurs, on connaît du document FR-A-1 047 939 un dispositif de raccordement étanche de tuyauteries. Afin d'isoler électriquement les deux pièces à raccorder, des garnitures isolantes sont placées entre ces pièces et entre l'une des pièces et un écrou vissé sur l'autre pièce.

La présente invention a précisément pour objet la réalisation d'un dispositif de raccordement étanche permettant de résoudre les inconvénients présentés par les dispositifs de raccordement de la technique antérieure. Ainsi, le dispositif selon l'invention permet d'effectuer un serrage particulièrement précis sans entraîner une complication trop grande de sa structure.

Dans ce but et conformément à l'invention, il est proposé un dispositif de raccordement étanche de deux pièces comprenant des moyens de serrage du type vis-écrou sollicitant les pièces à raccorder l'une vers l'autre afin de comprimer au moins un joint d'étanchéité entre lesdites pièces, caractérisé en ce que les moyens de serrage agissent sur un empilement comprenant, dans l'ordre et selon une direction axiale par rapport aux pièces à raccorder, une première de ces pièces, le joint d'étanchéité, la deuxième pièce à raccorder, des moyens élastiques et une pièce de compression, la raideur des moyens élastiques étant au moins égale à celle du joint d'étanchéité, de telle sorte que ledit empilement peut être serré à l'aide de moyens de compression annexes avant la mise en place des moyens de serrage, lesdits moyens élastiques servant à assurer la mise en tension des moyens de serrage lors du relâchement des moyens de compression annexes.

De préférence, lesdits moyens élastiques comprennent au moins un anneau torique élastique.

Grâce à ces caractéristiques, l'empilement constitué par la pièce de compression, les moyens élastiques, les deux pièces à raccorder et le joint d'étanchéité peut être serré par un dispositif de compression annexe avant la mise en place des moyens de serrage. L'effort de compression total appliqué par ce dispositif de compression annexe est calculé initialement pour tenir compte à la fois de l'effort de serrage que l'on souhaite appliquer finalement en tenant compte des caractéristiques mécaniques du joint d'étanchéité et de l'effort qui résultera par la suite de la mise en tension des moyens de serrage après leur mise en place et après que le dispositif de compression annexe ait été supprimé. Les moyens de serrage peuvent alors être mis en place manuellement et le dispositif de compression est ensuite relâché, de telle sorte que l'effort de serrage est transféré aux moyens de serrage. Les moyens élastiques, en se détendant légèrement, réalisent alors la mise en tension des moyens de serrage et assurent au niveau du joint d'étanchéité le maintien du serrage nécessaire défini en fonction des conditions d'utilisation. De plus, l'utilisation d'un anneau torique élastique permet de réaliser des dispositifs de raccordement de tous types et de toutes dimensions. En effet, l'encombrement réduit et les performances d'un anneau de ce type permettent d'utiliser un tel dispositif de raccordement étanche dans tous les montages industriels, depuis le raccordement pour canalisation de petit diamètre jusqu'aux assemblages boulonnés de grand diamètre. Un tel dispositif de raccordement permet en outre de réduire considérablement les risques de grippage. Enfin, ce dispositif de raccordement est particulièrement avantageux lorsque l'environnement de l'assemblage ne permet pas le passage des clés de serrage ou lorsque les contraintes de torsion qui résulteraient de leur emploi ne sont pas admises dans les tuyauteries.

Conformément à un premier mode de réalisation de l'invention, particulièrement adapté au raccordement de pièces de moyen et de grand diamètre, les moyens de serrage comprennent des boulons traversant des passages appropriés formés dans la pièce de compression et dans l'une au moins des pièces à raccorder. Le dispositif de raccordement peut alors comprendre soit un seul moyen élastique disposé coaxialement par rapport au joint d'étanchéité, soit plusieurs moyens élastiques disposés coaxialement autour de chaque boulon, selon que les pièces à raccorder ont un diamètre important ou seulement de dimension moyenne.

Selon un deuxième mode de réalisation de l'invention, plus particulièrement adapté au raccordement de pièces de petit diamètre, les moyens de serrage comprennent deux pièces annulaires coopérant entre elles par un filetage, et le dispositif de raccordement comprend un seul moyen élastique, les pièces annulaires et le moyen élastique étant disposés coaxialement par rapport au joint d'étanchéité.

Enfin, conformément à un troisième mode de réalisation de l'invention, également adapté au raccordement de pièces de petit diamètre, les moyens de serrage comprennent une pièce diamètre, les moyens de serrage comprennent une pièce annulaire qui coopère le dispositif de raccordement comprend un seul moyen élastique, la pièce annulaire et le moyen élastique étant disposés coaxialement par rapport au joint d'étanchéité.

On décrira maintenant, à titre d'exemple non limitatif, plusieurs modes de réalisation de l'invention, en se référant aux dessins annexés dans lesquels:

– la figure 1 est une vue en coupe longitudinale partielle d'un premier mode de réalisation du dispositif de raccordement étanche selon l'invention, particulièrement adapté au raccordement de deux canalisations de petit diamètre,

– la figure 2a est une demi-vue, en coupe longitudinale, d'un deuxième mode de réalisation du dispositif de raccordement selon l'invention, particulièrement adapté au raccordement de deux canalisations de diamètre moyen,

– la figure 2b est une demi-vue comparable à la figure 2a d'une variante de réalisation du dispositif représenté sur cette figure, particulièrement adapté au raccordment de canalisations de grand diamètre,

– la figure 3 est une vue en coupe longitudinale d'un dispositif de raccordement étanche d'un bouchon sur un récipient, les moitiés gauche et droite de cette figure montrant deux modes de réalisation différents du dispositif selon l'invention, particulièrement adaptés aux cas où le diamètre de l'orifice à obturer est de grande dimension et de petite dimension, respectivement, et

– la figure 4 est un diagramme montrant les courbes de variation de l'effort de serrage Y en fonction de l'écrasement e, la courbe a étant la courbe caractéristique du joint d'étanchéité, la courbe b étant la courbe caractéristique de l'anneau torique élastique et les courbes c et d étant les courbes caractéristiques de la compression et la décompression du joint et de l'anneau torique élastique.

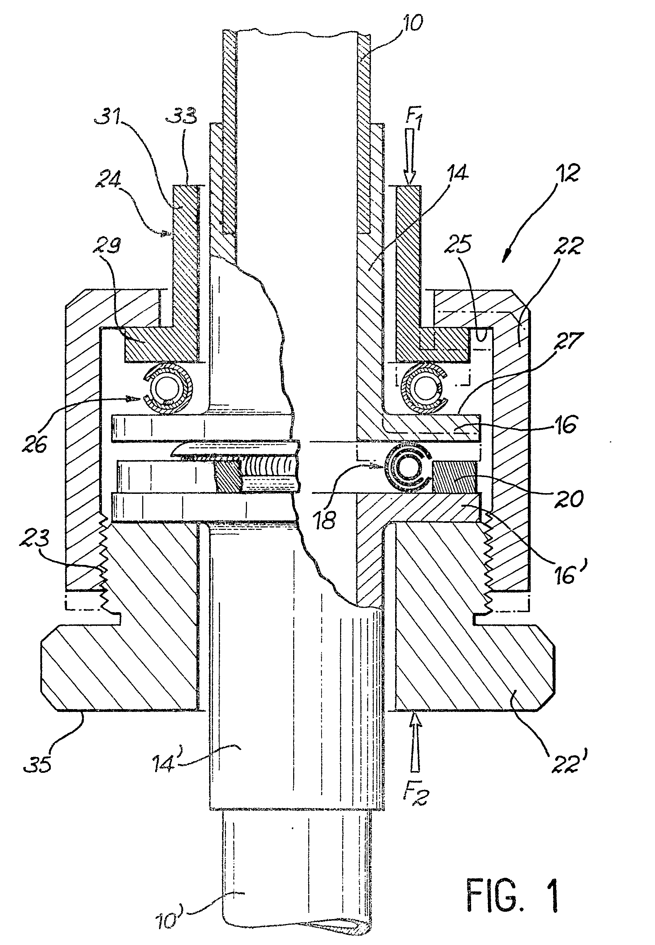

On a représenté sur la figure 1 deux canalisations de petit diamètre 10 et 10' qui sont raccordées de façon étanche au moyen d'un dispositif 12 réalisé conformément aux enseignements de la présente invention. A cet effet, chacune des canalisations 10 et 10' est munie d'un embout 14, 14' dont l'extrémité forme une bride 16, 16'. Un joint d'étanchéité torique 18, d'un quelconque type connu, est placé entre les faces en vis-à-vis des brides 16 et 16' et centré par rapport à l'axe commun des canalisations par une partie en saillie 20 de la bride 16'. On verra que la partie 20 sert également à limiter l'écrasement du joint 18 lors du serrage. Le joint 18 peut notamment être un joint métallique du type décrit et revendiqué dans le brevet français no 2 151 186 au nom du Commissariat à l'Energie Atomique.

Le dispositif de raccordement étanche 12 comprend en outre des moyens de serrage du type vis-écrou qui sont constitués dans le mode de réalisation représenté sur la figure 1 par deux pièces de forme annulaire 22 et 22' coopérant entre elles par un filetage 23. Pour cette raison, ce mode de réalisation est plus particulièrement adapté au cas où le diamètre des canalisations est faible.

Conformément à la présente invention, le dispositif 12 comprend de plus une pièce de compression 24 et un anneau torique élastique 26. Plus précisément, la pièce de compression 24 et l'anneau torique élastique 26 sont placés dans cet ordre entre la face active 25 de la pièce de serrage 22 et la face arrière 27 de la bride 16. La pièce 24 présente en section la forme d'un L de façon à définir une partie radiale 29 serrée entre la face 25 et l'anneau torique élastique 26 et une partie tubulaire 31 qui fait saillie à l'extérieur de la pièce de serrage 22 de façon à définir à son extrémité une face d'appui 33. Cette face d'appui 33 définit parallèlement à l'axe commun aux canalisations 10 et 10' l'une des extrémités du dispositif de raccordement 12, l'autre extrémité de ce dispositif étant définie par une face 35 formée sur la pièce de serrage 22' à son extrémité opposée à celle qui vient en appui contre la bride 16'.

Dans le mode de réalisation représenté sur la figure 1, l'anneau torique élastique 26 est constitué par un joint torique du type décrit et revendiqué dans le brevet français no 2 151 186 au nom du Commissariat à l'Energie Atomique. Toutefois, le joint 26 ne remplit aucune fonction d'étanchéité et il est utilisé comme un ressort de rappel. Cette utilisation se justifie par la grande faculté d'adaptation de ce type de joint, son encombrement réduit et ses performances qui permettent de l'utiliser dans tous les types de raccords.

Comme le montre la figure 1, dans ce premier mode de réalisation de l'invention, les embouts 14, 14', les pièces de serrage 22, 22', le joint 18, la pièce de compression 24 et l'anneau torique élastique 26 sont disposés coaxialement par rapport à l'axe commun aux canalisations 10 et 10'.

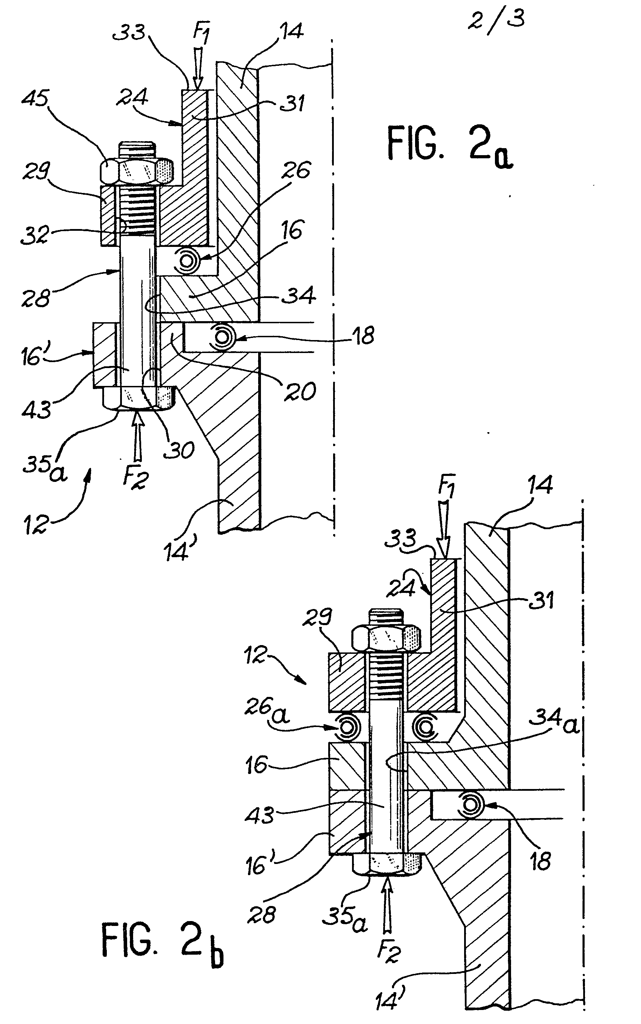

Le mode de réalisation de la figure 2b qui est plus particulièrement adapté au cas où le diamètre des canalisations à raccorder est de dimension moyenne, se distingue principalement du précédent par le fait que les moyens de serrage ne sont plus constitués par deux pièces annulaires mais par des boulons 28 régulièrement répartis autour des canalisations à raccorder et dont l'un seulement est représenté sur la figure 2a. Chacun des boulons 28 comprend une vis 43 qui traverse un trou 30 formé dans la bride 16' et un trou 32 formé dans la partie radiale 29 de la pièce de compression 24. Chaque boulon 28 comprend également un écrou 45 qui vient prendre appui sur la partie 29 de la pièce 24 alors que la tête de la vis 43 prend appui sur la bride 16'. Comme dans le mode de réalisation précédent, un joint d'étanchéité 18 est placé entre les brides 16 et 16' des embouts 14 et 14', le centrage de ce joint étant assuré par une partie 20 de la bride 16' qui permet également de limiter la déformation du joint 18. De plus, conformément à l'invention, un anneau torique élastique 26 est placé entre la pièce de compression 24 et la bride 16. La pièce 24 définit aussi à l'extrémité de sa partie tubulaire 31 une surface d'appui 33. A l'autre extrémité du dispositif de raccordement 12 représenté sur la figure 2a, une autre surface d'appui 35a est définie par le dessus de la tête de la vis 43.

Sur la figure 2a, on voit que chacune des vis 43 traverse également une encoche ouverte 34 formée à la périphérie externe de la bride 16. Toutefois, on comprendra que ces encoches 34 peuvent être soit supprimées si le diamètre externe de la bride 16 est réduit, soit remplacées par des trous si le diamètre de cette bride est augmenté.

Comme dans le mode de réalisation de la figure 1, les embouts 14 et 14', le joint d'étanchéité 18, la pièce de compression 24 et l'anneau torique élastique 26 sont disposés coaxialement par rapport à l'axe commun des canalisations à raccorder.

Sur la figure 2b, on a représenté un mode de réalisation voisin du mode de réalisation de la figure 2a, mais particulièrement adapté au cas où le dispositif selon l'invention est utilisé pour raccorder de façon étanche deux canalisations de plus grand diamètre. On retrouve sur la figure 2b les embouts 14 et 14' ainsi que leurs brides 16 et 16', le joint d'étanchéité 18, les boulons de serrage 28, ainsi que la pièce de compression 24. Toutefois, ce mode de réalisation diffère de celui de la figure 2a par le fait que l'anneau torique élastique unique 26 est remplacé par plusieurs anneaux du même type 26a qui sont disposés coaxialement autour de chacun des boulons 28 et dont l'un seulement est représenté sur la figure. Chacun des anneaux toriques élastiques 26a est placé entre la partie radiale 29 de la pièce de compression 24 et la bride 16, cette dernière se prolongeant alors radialement au même niveau que la partie 29, de telle sorte que l'encoche 34 de la figure 2a est remplacée par un trou 34a. Comme dans la variante de la figure 2a, l'extrémité 33 de la partie tubulaire 31 de la pièce 24 ainsi que le dessus 35a de la tête de chacune des vis 43 définissent des surfaces d'appui opposées pour le dispositif de raccordement étanche 12.

La disposition de la figure 2b se justifie dans le cas du raccordement de canalisations de grand diamètre par le fait que cette dimension rendrait un anneau torique élastique unique du type de l'anneau 26 de la figure 2a plus coûteux que plusieurs anneaux de petite dimension du type d'anneaux 26a sur la figure 2b.

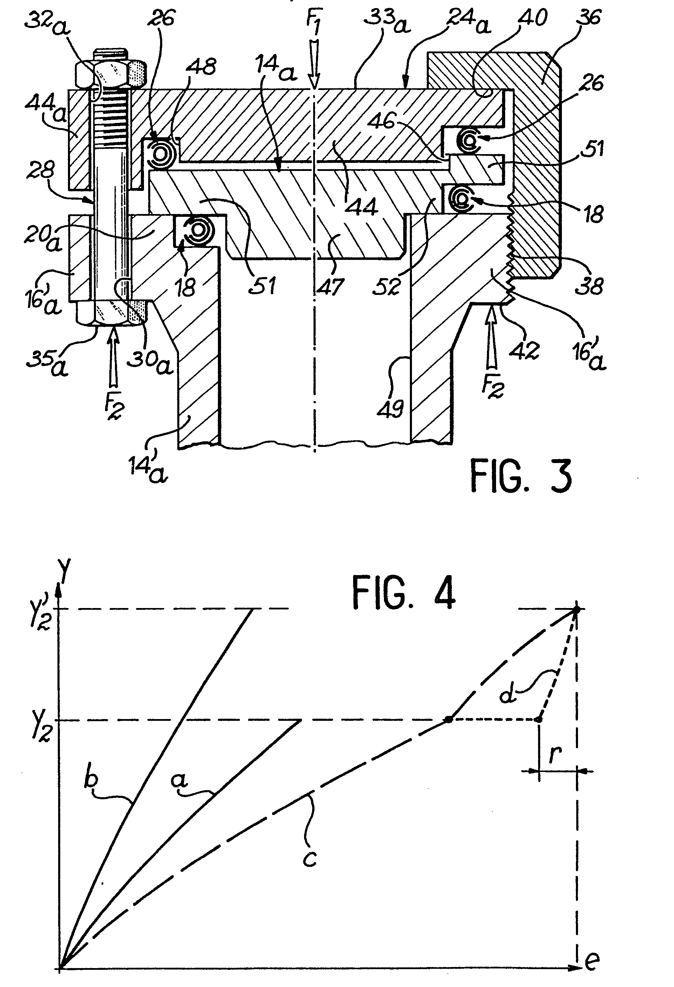

Les moitiés droite et gauche de la figure 3 illustrent deux autres modes de réalisation du dispositif selon l'invention qui sont à rapprocher des modes de réalisation de la figure 1 et de la figure 2a respectivement, dans le cas où ce dispositif n'est plus utilisé pour raccorder deux canalisations mais pour raccorder de façon étanche un bouchon 14a et un récipient 14a. Ainsi, on voit sur la figure 3 que le bouchon 14a comprend une partie de centrage 47 qui pénètre légèrement à l'intérieur de l'ouverture 49 du récipient 14'a que l'on désire obturer et un rebord 51 qui vient en appui sur une bride 16'a formée autour de l'ouverture 49. Ici encore, l'étanchéité est obtenue au moyen d'un joint 18 qui peut être du même type que les joints décrits en se référant aux modes de réalisation précédents. Ce joint 18 est comprimé entre le rebord 51 du bouchon 14a et la bride 16'a. Dans le mode de réalisation représenté sur la partie droite de la figure 3, le centrage du joint 18 est réalisé au moyen d'une partie 52 du bouchon 14a, qui limite également la déformation du joint, alors que dans le mode de réalisation représenté sur la partie gauche de la figure 3, ces mêmes fonctions sont remplies par une partie 20a de la bride 16'a.

Le mode de réalisation représenté sur la partie droite de la figure 3 correspond au raccordement d'un bouchon sur un récipient de petite dimension. Dans ce cas, les moyens de serrage comprennent une pièce annulaire unique 36 qui coopère directement avec la bride 16'a par l'intermédiaire d'un filetage 38, cette pièce de serrage 36 comprenant de plus une partie radiale définissant une surface 40 en vis-à-vis du rebord périphérique 51 du bouchon 14a et de la bride 16'a.

Conformément à l'invention, une pièce de compression 24a et un anneau torique élastique 26 sont disposés dans cet ordre entre la surface 40 de la pièce de serrage 36 et la bride périphérique 51 du bouchon 14a. Toutefois, à la différence des pièces de compression utilisées dans les dispositifs de raccordement de canalisations décrits précédemment, la pièce de compression 24a se présente sous la forme d'un disque et définit une surface d'appui 33a dans la partie centrale de ce disque. La surface d'appui opposée du dispositif de raccordement est constituée par la face inférieure 42 de la bride 16'a. Le centrage de la pièce 24a et de l'anneau 26 sont réalisés au moyen d'une partie centrale en saillie 44 qui pénètre dans un évidement 46 du bouchon 14a.

Dans ce mode de réalisation représenté sur la partie droite de la figure 3, le bouchon 14a, le récipient 14'a, le joint d'étanchéité 18, la pièce de serrage 36, la pièce de compression 24a et l'anneau torique élastique 26 sont disposés de façon coaxiale par rapport à l'axe de l'ouverture 49 obturée par le bouchon 14a.

Le dispositif représenté sur la partie gauche de la figure 3 est plus particulièrement adapté au cas où les dimensions du récipient 14'b sont plus importantes, et notamment au cas où ce récipient constitue un château de transport pour combustibles nucléaires irradiés. Les moyens de serrage sont alors constitués par des boulons 28 régulièrement répartis à la périphérie de l'ouverture formée dans le récipient et dont l'un seulement est représenté sur la figure. Ces boulons traversent des trous 30a formés dans la bride 16'a et des trous 32a formés dans la pièce de compression 24a qui est par ailleurs en forme de disque comme celle qui a été décrite en se référant à la partie droite de la figure 3. Toutefois, le centrage de la pièce 24a ainsi que celui de l'anneau 26 réalisés au moyen d'une partie annulaire en saillie 44a qui vient s'emboîter à la périphérie du bouchon 14a. L'anneau torique élastique 26 est par ailleurs placé dans un logement 48 formé dans la pièce de compression 24a.

Dans ce dernier mode de réalisation du dispositif selon l'invention représenté sur la partie gauche de la figure 3, la bride 16'a, le couvercle 14a, le joint d'étanchéité 18, la pièce de compression 24a ainsi que l'anneau torique élastique 26 sont également disposés coaxialement par rapport à l'axe de l'ouverture 49 du récipient 14'a.

Dans le dispositif de raccordement selon l'invention qui vient d'être décrit en se référant aux figures 1 à 3, les courbes caractéristiques des variations de l'effort Y appliqué en fonction de l'écrasement $e$ correspondent à la courbe $a$ de la figure 4 pour le joint d'étanchéité 18 et la courbe $b$ de la figure 4 pour l'anneau torique élastique 26 ou pour les anneaux toriques élastiques 26a. On remarque sur cette figure que la raideur de la courbe caractéristique $b$ de l'anneau torique métallique flexible 26 ou des anneaux 26a est supérieure à celle du joint d'étanchéité, ce qui est important pour le bon fonctionnement du dispositif selon l'invention.

En pratique, le serrage de l'assemblage est réalisé au moyen d'un système de serrage annexe (non représenté) en l'absence des moyens de serrage proprement dits (pièces 22, 22', boulons 28 ou pièce 36). Ce système de serrage peut être constitué notamment par un vérin dont l'action est représentée schématiquement par des flèches $F_1$ et $F_2$ sur les figures 1 à 3. Comme on le voit, ce vérin agit simultanément sur les faces d'appui 33, 33a de la pièce de compression 24, 24a (flèches $F_1$) et sur les faces d'appui opposées 35, 35a, 42 (flèches $F_2$). Toutefois, dans les modes de réalisation de la figure 3, on comprendra que les faces d'appui 35a et 42 peuvent reposer dans un alvéole contenant le récipient 14'a, de telle sorte que le vérin n'agit alors que sur la face 33a.

L'effort de serrage $Y'_2$ ainsi appliqué à l'assemblage au moyen du vérin de serrage annexe est calculé initialement de façon à être égal à l'effort de serrage $Y_2$ que l'on désire obtenir, augmenté d'un effort permettant de compenser l'effort appliqué ulterieurement par le ou les anneau(x) 26, 26a pour assurer la mise en tension des moyens de serrage 22, 22', 28 ou 36 du dispositif de raccordement (voir figure 4). Ainsi, la courbe $c$ de la figure 4 montre la variation de l'effort Y en fonction de l'écrasement $e$ résultant de l'effort de serrage $Y'_2$ appliqué simultanément au(x) anneau(x) 26 ou 26a et au joint 18. On voit sur cette figure que la courbe $c$ correspond à la somme des courbes $a$ et $b$ jusqu'à l'effort $Y_2$ que l'on désire obtenir. Ensuite, la déformation du joint d'étanchéité 18 est empêchée par les parties 20, 20a, ou 52, de telle sorte que seul l'anneau torique élastique 26 ou les anneaux 26a se déforment jusqu'à l'effort total appliqué $Y'_2$.

Les moyens de serrage (boulon 28 pièces 22, 22', pièce 36 ou écrou 45 seul) peuvent alors être mis en place manuellement sans aucun effort. On relâche ensuite le vérin de serrage annexe, de telle sorte que ces moyens de serrage sont mis en tension. Sur la figure 4, la courbe $d$ représente la décompression correspondante de l'assemblage, c'est-à-dire du joint 18 et de(s) l'anneau(x) 26 ou 26a. On voir que, conformément à l'invention, la détente ou restitution élastique $r$ de l'anneau 26 ou des anneaux 26a a pour effet d'assurer la mise en tension des moyens de serrage, conduisant ainsi à la diminution de l'effort appliqué à l'assemblage depuis la valeur maximum $Y'_2$ jusqu'à la valeur souhaitée $Y_2$.

La description qui précède montre que le dispositif de raccordement selon l'invention permet grâce à la présence de l'anneau torique élastique 26 ou des anneaux 26a de soumettre l'assemblage à un effort prédéterminé $Y_2$ de façon très précise et sans que la mise en place des moyens de serrage présente de problème particulier. De plus, l'utilisation d'un joint torique métallique élastique permet de ne pas accroître considérablement l'encombrement du dispositif de raccordement et autorise l'application de la méthode de serrage décrite pratiquement dans tous les montages industriels.

## Revendications

1. Dispositif de raccordement étanche de deux pièces (14, 14'; 14a, 14'a), comprenant des moyens de serrage (22, 22'; 28; 36) du dype vis-écrou sollicitant les pièces à raccorder l'une vers l'autre afin de comprimer au moins un joint d'étanchéité (18) entre lesdites pièces, caractérisé en ce que les moyens de serrage agissent sur un empilement comprenant, dans l'ordre et selon une direction axiale par rapport aux pièces à raccorder, une première (14', 14'a) de ces pièces, le joint d'étanchéité (18), la deuxième pièce à raccorder (14, 14a), des moyens élastiques (26, 26a) et une pièce de compression (24, 24a), la raideur des moyens élastiques étant au moins égale à celle du joint d'étanchéité, de telle sorte que ledit empilement peut être serré à l'aide de moyens de compression annexes avant la mise en place des moyens de serrage, desdits moyens élastiques (26, 26a) servant à assurer la mise en tension des moyens de serrage (22, 22'; 28; 36) lors du relâchement des moyens de compression annexes.

2. Dispositif selon la revendication 1, caractérisé en ce que lesdits moyens élastiques comprennent au moins un anneau torique élastique (26, 26a).

3. Dispositif selon l'une quelconque des revendications 1 et 2, caractérisé en ce que les moyens de serrage comprennent des boulons (28) traversant des passages appropriés (30, 32, 34; 30a, 32a) formés dans la pièce de compression et dans l'une au moins des pièces à raccorder.

4. Dispositif selon la revendication 3, caractérisé en ce qu'il comprend un seul moyen élastique (26) disposé coaxialement par rapport au joint d'étanchéité (18).

5. Dispositif selon la revendication 3, caractérisé en ce qu'il comprend plusieurs moyens élastiques (26a) disposés coaxialement autour de chaque boulon (28).

6. Dispositif selon l'une quelconque des revendications 1 et 2, caractérisé en ce que les moyens de serrage comprennent deux pièces annulaires (22, 22') coopérant entre elles par un filetage (23), et en ce qu'il comprend un seul moyen élastique (26), les pièces annulaires et le moyen élastique étant disposés coaxialement par rapport au joint d'étanchéité (18).

7. Dispositif selon l'une quelconque des revendications 1 et 2, caractérisé en ce que les moyens de serrage comprennent une pièce annulaire (36) qui coopère par un filetage (38) avec l'une (14'a) des pièces à raccorder et en ce qu'il comprend un seul moyen élastique (26), la pièce annulaire et le moyen élastique étant disposés coaxialement par rapport au joint d'étanchéité (18).

## Patentansprüche

1. Vorrichtung zur dichten Verbindung von zwei Teilen (14, 14'; 14a, 14'a), enthaltend Spanneinrichtungen (22, 22'; 28; 36) vom Schraube/Mutter-Typ, die auf die miteinander zu verbindenden Teile einwirken, um wenigstens eine Verbindungsdichtung (18) zwischen den Teilen zusammenzudrücken, dadurch gekennzeichnet, dass die Spanneinrichtungen auf eine Stapelanordnung einwirken, bestehend aus, in der Reihenfolge in einer axialen Richtung in bezug auf die miteinander zu verbindenden Teile gesehen, einem ersten (14', 14'a) dieser Teile, der Verbindungsdichtung (18), dem zweiten zu verbindenden Teil (14, 14a), elastischen Einrichtungen (26, 26a) und einem Druckstück (24, 24a), wobei die Steifigkeit der elastischen Einrichtung wenigstens gleich der der Dichtungsverbindung ist, so dass die genannte Stapelanordnung mit Hilfe von vor dem Anbringen der Spanneinrichtungen angebrachten Druckeinrichtungen gespannt werden kann, wobei die elastischen Einrichtungen (26, 26a) dazu dienen, die Unterspannungsetzung der Spanneinrichtungen (22, 22'; 28; 36) beim Lokkern der angebrachten Druckeinrichtungen sicherzustellen.

2. Vorrichtung nach Anspruch 1, dadurch gekennzeichnet, dass die elastischen Einrichtungen wenigstens einen torusförmigen elastischen Ring (26, 26a) enthalten.

3. Vorrichtung nach einem der Ansprüche 1 und 2, dadurch gekennzeichnet, dass die Spanneinrichtungen Gewindebolzen (28) enthalten, die geeignete Löcher (30, 32, 34; 30a, 32a) durchqueren, die in dem Druckstück und in wenigstens einem der zu verbindenden Teile ausgebildet sind.

4. Vorrichtung nach Anspruch 3, dadurch gekennzeichnet, dass sie eine einzige elastische Einrichtung (26) enthält, die koaxial in bezug auf die Verbindungsdichtung (18) angeordnet ist.

5. Vorrichtung nach Anspruch 3, dadurch gekennzeichnet, dass sie mehrere elastische Einrichtungen 26a) enthält, die koaxial um jeden Gewindebolzen (28) angeordnet sind.

6. Vorrichtung nach einem der Ansprüche 1 und 2, dadurch gekennzeichnet, dass die Spanneinrichtungen zwei ringförmige Teile (22, 22') enthalten, die miteinander durch eine Verschraubung (23) zusammenwirken, und dass sie eine einzige elastische Einrichtung (26) enthält, wobei die ringförmigen Teile und die elastische Einrichtung koaxial in bezug auf die Verbindungsdichtung (18) angeordnet sind.

7. Vorrichtung nach einem der Ansprüche 1 und 2, dadurch gekennzeichnet, dass die Spanneinrichtungen ein ringförmiges Teil (36) aufweisen, das mittels einer Verschraubung (38) mit einem (14'a) der zu verbindenden Teile zusammenwirkt und dass sie eine einzige elastische Einrichtung (26) aufweist, wobei das ringförmige Teil und die elastische Einrichtung koaxial in bezug auf die Verbindungsdichtung (18) angeordnet sind.

## Claims

1. Apparatus for forming a fluid-tight joint between two members (14, 14'; 14a, 14'a), comprising tightening means (22, 22'; 28; 36) of the screw-tightening type urging the pieces to be joined towards one another whereby to compress at least one sealing gasket (18) between the said members, characterized in that the tightening means act upon a stack comprising, in order and in an axial direction with respect to the pieces to be joined together, a first member (14', 14'a), the sealing gasket (18), the second member to be joined (14, 14a), elastic means (26, 26a) and a compression member (24, 24a), the stiffnes of the elastic means being at least equal to that of the sealing gasket, whereby said stack may be tightened with the aid of attached compression means before positioning the tightening means, said elastic means (26, 26a) acting to ensure that the tightening means (22, 22'; 28; 36) are placed in tension during release of the compression means.

2. Apparatus according to Claim 1, characterized in that said elastic means comprise at least one elastic ring (26, 26a).

3. Apparatus according to either of Claims 1 and 2, characterized in that the tightening means comprise bolts (28) passing through appropriately-formed passages (30, 32, 34; 30a, 32a) in the compression member and in at least one of the two members to be joined together.

4. Apparatus according to Claim 3, characterized in that it comprises a single elastic member (26) coaxially located with respect to the sealing gasket (18).

5. Apparatus according to Claim 3, characterized in that it comprises a plurality of elastic members (26a) coaxially disposed around each bolt (28).

6. Apparatus according to either of Claims 1 and 2, characterized in that the locking means comprise two annular members (22, 22') cooperating with one another by means of a threaded portion (23), and in that it comprises a single elastic member (26), the annular members and the elastic member being coaxially disposed with respect to the sealing gasket (18).

7. Apparatus according to either of Claims 1 and 2, characterized in that the tightening means comprise an annular member (36) which cooperates by a threaded portion (38) with one of the members to be joined (14'a) and in that it comprises a single elastic member (26), the annular member and the elastic member being coaxially disposed with respect to the sealing gasket (18).

FIG. 1

FIG. 2a

FIG. 2b

FIG. 3

FIG. 4